# EUROPÄISCHE PATENTSCHRIFT

(11) **EP 2 030 769 B1**
(45) Veröffentlichungstag und Bekanntmachung des Hinweises auf die Patenterteilung: **25.09.2013**
(21) Anmeldenummer: 07016982.6
(22) Anmeldetag: 30.08.2007
(51) Int. Cl.: B29D 22/00, F28D 20/00, B29C 49/20, B29C 41/04, B29C 41/20, B29C 53/82, F28F 21/06, B29C 49/04

(54) **Verfahren zur Herstellung eines Wärmespeichers**
Method for manufacturing a heat exchanger
Procédé de fabrication d'un accumulateur thermique

(43) Veröffentlichungstag der Anmeldung: 04.03.2009
(73) Patentinhaber: Roth Werke GmbH, 35232 Dautphetal (DE)
(72) Erfinder:
(74) Vertreter: Rohmann, Michael

(56) Entgegenhaltungen:
- EP-A- 0 897 791
- WO-A1-00/15414
- FR-A- 2 702 270
- JP-A- 11 270 908
- US-A- 4 783 232
- US-A1- 2004 168 773

## Beschreibung

Die Erfindung betrifft ein Verfahren zur Herstellung eines Wärmespeichers mit einem Wärmetauscher für fluide Medien und einem den Wärmetauscher umgebenden Kunststoffbehälter, wobei der Wärmetauscher zumindest einen Anschluss zur Einleitung und/oder Entnahme eines fluiden Mediums aufweist, wobei der Wärmetauscher in eine Blasform oder Rotationsform eingeführt und in der Blasform oder Rotationsform gehalten wird, wobei der den Wärmetauscher umgebende Kunststoffbehälter im Blasformverfahren oder Rotationsverfahren mit der Maßgabe hergestellt bzw. geformt wird, dass die Anschlussleitung des Wärmetauschers die Wandung des Kunststoffbehälters durchgreift bzw. durchdringt.

Verfahren zur Herstellung von Wärmespeichern sind aus der Praxis grundsätzlich bekannt. Dabei werden in der Regel Behältersegmente um einen Wärmetauscher aus Metall oder Kunststoff angeordnet und zur Ausbildung eines den Wärmetauscher umgebenden Behälters miteinander verschweißt. Bei anderen Wärmespeichern wird ein Wärmetauscher durch eine große Öffnung in einen äußeren Behälter eingesetzt, der durch eine aufwendige Deckelanordnung verschlossen wird. Die zur fachgerechten Dimensionierung erforderlichen Wandstärken führen zu aufwendigen Konstruktionen und hohen Produktgewichten. Im Ergebnis ist die Festigkeit, Stabilität und Druckbeständigkeit der aus der Praxis bekannten Wärmespeicher verbesserungsfähig. Aus JP 11 270908 ist ein Wärmespeicher, gemäß dem Oberbegriff des Anspruchs 1, bekannt, bei dem ein Speicherkörper durch Blasformen erzeugt wird und bei dem in dem Speicherkörper ein Wärmetauscher angeordnet ist. Aus FR 2 702 270 A ist ein Kühlaggregat mit einem wasserdichten Kunststoffbehälter bekannt, wobei in dem Kunststoffbehälter eine Kühlschlange aus einem kunststoffbeschichteten Stahlrohr oder Kupferrohr angeordnet ist. Der Kunststoffbehälter ist gemäß FR 2 702 270 A im Rotationsverfahren herstellbar. Aus EP 0 897 791 A2 ist eine Anlage und ein Verfahren zur Herstellung eines mit einem Geflecht umgebenen Behälters bekannt. Dieser Behälter kann beispielsweise zur Lagerung von verflüssigtem Erdgas eingesetzt werden. In US 4,783,232 ist ein Kraftstofftank oder Gastank mit einem Kunststoffbehälter beschrieben, welcher Kunststoffbehälter mit harzimprägnierten Filamenten umwickelt ist. WO 00/15414 offenbart ein Verfahren eines druckbeständigen Behälters, wobei auf einen Kunststoffbehälter mit thermoplastischem Material imprägnierte Fasern aufgewickelt werden. Um die mit dem thermoplastischen Material imprägnierten Fasern mit dem Kunststoffkörper zu verbinden, wird der umwickelte Kunststoffkörper in einem Formwerkzeug erwärmt, wobei zeitgleich die Umwicklung gegen den Kunststoffkörper gedrückt wird. In US 2004/0168773 A1 ist ein Verfahren und eine Vorrichtung zur Herstellung eines umwickelten Kunststoffbehälters beschrieben, wobei in eine Polymermatrix eingebettete Fasern um den Kunststoffkörper gewickelt werden. Zur Verbindung des Kunststoffkörpers mit den in der Polymermatrix angeordneten Fasern wird der umwickelte Kunststoffkörper erwärmt. Die Kunststoffbehälter von aus der Praxis bekannten Wärmespeichern enthalten darüber hinaus meist duroplastische Kunststoffe. Die für diese Kunststoffe üblichen Ausgasungen können die Qualität des zu erwärmenden fluiden Mediums negativ beeinflussen. Dies ist insbesondere beim Erwärmen von Leitungswasser nachteilig.

Der Erfindung liegt das technische Problem zugrunde, ein Verfahren zur Herstellung eines Wärmespeichers anzugeben, der über eine hervorragende Festigkeit, insbesondere über eine erhöhte Druckbeständigkeit verfügt und mit dem die oben beschriebenen Nachteile überwunden werden.

Zur Lösung des technischen Problems lehrt die Erfindung ein Verfahren zur Herstellung eines Wärmespeichers der eingangs genannten Art, das dadurch gekennzeichnet ist, dass der Kunststoffbehälter mit zumindest einem faserverstärkten Werkstoff zumindest bereichsweise umwickelt wird, dass der faserverstärkte Werkstoff mindestens einen thermoplastischen Kunststoff als Werkstoff enthält und dass der faserverstärkte Werkstoff vor dem Wickelvorgang erwärmt wird, so dass bereits beim Umwickeln des Kunststoffbehälters der thermoplastische Kunststoff, der in dem faserverstärkten Werkstoff enthalten ist, auf den Kunststoffbehälter aufgeschmolzen wird. Es liegt im Rahmen der Erfindung, dass der Wärmetauscher zumindest eine Anschlussleitung bzw. einen Vorlauf zum Einleiten eines fluiden Mediums in den Wärmetauscher und zumindest eine weitere Anschlussleitung bzw. einen Rücklauf zur Entnahme des fluiden Mediums aus dem Wärmetauscher aufweist. Vorzugsweise weist der Wärmetauscher zwei Anschlussleitungen auf, wobei bevorzugt eine Anschlussleitung zur Einleitung und eine Anschlussleitung zur Entnahme des fluiden Mediums vorgesehen ist. Es hat sich bewährt, den Wärmetauscher aus einem metallischen Werkstoff zu fertigen. Grundsätzlich liegen aber auch Wärmetauscher aus Kunststoff im Rahmen der Erfindung.

Nach einer ersten bevorzugten Ausführungsform wird der Wärmetauscher in eine Blasform eingebracht und gehalten, wobei ein Kunststoffschlauch über den in der Blasform gehaltenen Wärmetauscher gezogen wird und wobei der Kunststoffbehälter durch Blasformen des Kunststoffschlauches hergestellt wird. In der Blasform bzw. Kunststoffblasform wird der Wärmetauscher zweckmäßigerweise auf einem Dorn bzw. Blasdorn eines Extrusionswerkzeuges befestigt. Alternativ wird der Wärmetauscher - gegebenenfalls mit einem Draht, vorzugsweise Kunststoffdraht - an eine Düse bzw. einen Düsenring des Extrusionswerkzeuges gehängt. Mittels des Extrusionswerkzeuges wird ein Kunststoffschlauch geformt, der über den Wärmetauscher gezogen wird. Es liegt im Rahmen der Erfindung, dass der Kunststoffschlauch aus einem thermoplastischen Kunststoff, vorzugsweise aus zumindest einem Polyolefin und bevorzugt aus Polypropylen und/oder Polyethylen besteht. Anschließend wird der extrudierte Kunststoffschlauch zu einem Kunststoffbehälter blasgeformt. Der Kunststoffbehälter umgibt den Wärmetauscher zumindest bereichsweise und zweckmäßigerweise vollständig bzw. im Wesentlichen vollständig. Vorzugsweise weist der Kunststoffbehälter eine Öffnung für die zumindest eine Anschlussleitung des Wärmetauschers auf.

Nach einer zweiten bevorzugten Ausführungsform der Erfindung wird der Wärmetauscher in eine Rotationsform eingeführt und darin gehalten, wobei in die Rotationsform eine flüssige und/oder pulverförmige Formmasse gefüllt wird und wobei der Kunststoffbehälter durch Rotationsformen aus der Formmasse hergestellt wird. Die in die Rotationsform eingebrachte flüssige und/oder pulverförmige Formmasse enthält vorzugsweise zumindest einen thermoplastischen Kunststoff, zweckmäßigerweise zumindest ein Polyolefin und bevorzugt Polypropylen und/oder Polyethylen. Die flüssige und/oder pulverförmige Formmasse wird mit der Maßgabe zu dem Kunststoffbehälter rotationsgeformt, dass der Kunststoffbehälter den Wärmetauscher zumindest bereichsweise, zweckmäßigerweise vollständig bzw. im Wesentlichen vollständig umgibt. Nach einer besonders bevorzugten Ausführungsform durchgreift bzw. durchdringt die zumindest eine Anschlussleitung des Wärmetauschers die Wandung des Kunststoffbehälters.

Vorzugsweise wird der Kunststoffbehälter mit der Maßgabe hergestellt, dass der Kunststoffbehälter den Wärmetauscher zumindest bereichsweise berührungsfrei umgibt. Nach einer besonders bevorzugten Ausführungsform umgibt der Kunststoffbehälter den Wärmetauscher in der Weise, dass zwischen dem Kunststoffbehälter und dem Wärmetauscher ein Hohlraum ausgebildet ist. Vorzugsweise berühren sich der Wärmetauscher und der Kunststoffbehälter bis auf den Kontakt zwischen der Wandung des Kunststoffbehälters und der zumindest einen Anschlussleitung des Wärmetauschers nicht. Der Hohlraum zwischen dem Kunststoffbehälter und dem Wärmetauscher ist empfohlenermaßen mit einem fluiden Puffermedium das zweckmäßigerweise nicht bzw. nicht wesentlich komprimierbar ist, vorzugsweise mit Wasser, befüllt.

Erfindungsgemäß wird der Kunststoffbehälter mit zumindest einem faserverstärkten Werkstoff zumindest bereichsweise umwickelt. Nach einer besonders bevorzugten Ausführungsform wird der Kunststoffbehälter vollständig bzw. im Wesentlichen vollständig mit einem faserverstärkten Werkstoff umwickelt.

Erfindungsgemäß enthält der faserverstärkte Werkstoff mindestens einen thermoplastischen Kunststoff als Werkstoff. Gemäß einer besonders bevorzugten Ausführungsvariante ist der in dem faserverstärkten Werkstoff enthaltene thermoplastische Kunststoff der gleiche, aus dem der Kunststoffbehälter gefertigt ist. Mit anderen Worten ist der in dem faserverstärkten Werkstoff enthaltene thermoplastische Kunststoff vorzugsweise zumindest ein Polyolefin und bevorzugt Polypropylen und/oder Polyethylen.

Es liegt im Rahmen der Erfindung, dass der faserverstärkte Werkstoff 10 Gew.-% bis 50 Gew.-% des thermoplastischen Kunststoffes enthält. Vorzugsweise enthält der faserverstärkte Werkstoff 15 Gew.% bis 45 Gew.%, bevorzugt 20 Gew.% bis 40 Gew.% und besonders bevorzugt 25 Gew.% bis 35 Gew.% des thermoplastischen Kunststoffes. Nach einer besonders bevorzugten Ausführungsform weist der faserverstärkte Werkstoff 30 Gew.% bzw. ungefähr 30 Gew.% des thermoplastischen Kunststoffes auf. Vorzugsweise enthält der faserverstärkte Werkstoff 50 Gew.% bis 90 Gew.% zumindest einer Faserart. Empfohlenermaßen weist der faserverstärkte Werkstoff 55 Gew.% bis 85 Gew.%, zweckmäßigerweise 60 Gew.% bis 80 Gew.% und bevorzugt 65 Gew.% bis 75 Gew.% der zumindest einen Faserart auf. Nach einer besonders bevorzugten Ausführungsform der Erfindung enthält der faserverstärkte Werkstoff 70 Gew.% oder ungefähr 70 Gew.% der zumindest einen Faserart.

Weiterhin liegt im Rahmen der Erfindung, dass als Faserart Glasfasern in dem faserverstärkten Werkstoff enthalten sind. Um eine innige Verbindung zwischen dem faserverstärkten Werkstoff und dem Kunststoffbehälter zu erhalten, wird der faserverstärkte Werkstoff auf den Kunststoffbehälter aufgeschmolzen. Erfindungsgemäß wird der faserverstärkte Werkstoff vor dem Wickelvorgang erwärmt, so dass bereits beim Umwickeln des Kunststoffbehälters der thermoplastische Kunststoff, der in dem faserverstärktem Werkstoff enthalten ist, auf den Kunststoffbehälter aufgeschmolzen wird. In einer anderen Ausführungsform der Erfindung wird der bereits mit dem faserverstärkten Werkstoff umwickelte Kunststoffbehälter erwärmt, so dass der in dem faserverstärkten Werkstoff enthaltene thermoplastische Kunststoff nach dem Umwickeln mit dem Kunststoffbehälter verschmolzen wird.

Nicht zur Erfindung gehörig ist ein Wärmespeicher, wobei der Wärmespeicher einen Wärmetauscher und einen Kunststoffbehälter aufweist, wobei der Wärmetauscher zumindest eine Anschlussleitung zur Einleitung und/oder Entnahme eines fluiden Mediums aufweist und wobei der Wärmetauscher mit der Maßgabe in dem durch Blasformen oder Rotationsformen hergestellten Kunststoffbehälter angeordnet ist, dass die Anschlussleitung des Wärmetauschers die Wandung des Kunststoffbehälters durchgreift bzw. durchdringt. Der Wärmetauscher ist zweckmäßigerweise aus einem metallischen Werkstoff gefertigt. Gegebenenfalls kann der Wärmetauscher auch aus Kunststoff, empfohlenermaßen aus thermoplastischem Kunststoff, gefertigt sein. Erfindungsgemäß umgibt den Wärmetauscher ein durch Blasformen oder Rotationsformen hergestellter Kunststoffbehälter, der vorzugsweise einen thermoplastischen Kunststoff, insbesondere ein Polyolefin und bevorzugt Polypropylen und/oder Polyethylen enthält. Es liegt im Rahmen der Erfindung, dass der Kunststoffbehälter zumindest eine Einfüllöffnung für das fluide Puffermedium aufweist. Der Kunststoffbehälter umgibt den Wärmetauscher zweckmäßigerweise mit der Maßgabe, dass zwischen dem Kunststoffbehälter und dem Wärmetauscher ein Hohlraum ausgebildet ist, in dem vorzugsweise ein fluides Puffermedium aufgenommen ist. Es hat sich bewährt, dass das in dem Hohlraum aufgenommene fluide Puffermedium nicht bzw. nicht wesentlich komprimierbar ist. Empfohlenermaßen berühren sich die Innenwand des Kunststoffbehälters und die Außenwand des Wärmetauschers nicht. Die zumindest eine Anschlussleitung des Wärmetauschers durchdringt bzw. durchgreift die Wandung des Kunststoffbehälters und steht in vorzugsweise fluiddichtem Kontakt mit der Wandung des Kunststoffbehälters. Zur Erhöhung der Druckbeständigkeit, Festigkeit und Stabilität ist der Kunststoffbehälter mit einem faserverstärkten, vorzugsweise glasfaserverstärkten Werkstoff umwickelt. In einer bewährten Ausführungsform enthält der faserverstärkte Werkstoff zumindest einen thermoplastischen Kunststoff, vorzugsweise zumindest ein Polyolefin und bevorzugt Polypropylen und/oder Polyethylen. Nach einer besonders bevorzugten Ausführungsform ist der thermoplastische Kunststoff des faserverstärkten Kunststoffes mit dem Kunststoffbehälter verschmolzen.

Der Erfindung liegt die Erkenntnis zugrunde, dass die aus der Praxis bekannten Nachteile mit dem erfindungsgemäßen Wärmespeicher einfach und problemlos überwunden werden. Durch das Blasformen oder Rotationsformen des den Wärmetauscher umgebenden Kunststoffbehälters ist ein aufwendiges und fehleranfälliges Zusammenfügen mehrerer Behälterteile nicht mehr erforderlich. Darüber hinaus gestattet das Formen des Kunststoffbehälters um den Wärmetauscher die Vermeidung einer großen Öffnung, durch die bei anderen aus der Praxis bekannten Behältern der Wärmetauscher in den Behälter eingeführt wird. Die die Stabilität bzw. Festigkeit des Kunststoffbehälters schwächenden Schweißnähte können auf diese Weise ebenso wie aufwendige Deckelanordnungen und Flansche vermieden werden. Der erfindungsgemäße Wärmespeicher ist in vorteilhafter Weise schweißnahtfrei oder im Wesentlichen schweißnahtfrei ausgestaltet. Funktionsbedingt bzw. temperaturbedingt ändert sich das Volumen des Wärmetauschers, wobei die Volumenänderung auf das in dem Hohlraum zwischen Wärmetauscher und Wandung des Kunststoffbehälters befindliche nicht bzw. im Wesentlichen nicht komprimierbare Puffermedium übertragen wird und zu einer Druckerhöhung in dem Hohlraum führt. Diese wird durch das nicht bzw. im Wesentlichen nicht komprimierbare fluide Puffermedium auf die Kunststoffbehälterwandung gleichmäßig übertragen und von der bevorzugten Umwicklung des Kunststoffbehälters funktionssicher aufgenommen. Der erfindungsgemäße Wärmespeicher zeichnet sich insoweit durch eine gegenüber dem Stand der Technik verbesserte Stabilität bzw. Festigkeit und insbesondere Druckbeständigkeit aus. Besonders bevorzugt ist dabei ein Verschmelzen des faserverstärkten Werkstoffes mit dem Kunststoffbehälter. Auf diese Weise wird eine besonders dauerhafte Funktionssicherheit des Wärmespeichers gewährleistet, die auch durch Druckschwankungen nicht beeinträchtigt wird. Darüber hinaus liegt der Erfindung die Erkenntnis zugrunde, dass durch den Einsatz von thermoplastischen Kunststoffen für den Kunststoffbehälter die bei duroplastischen Werkstoffen üblichen Ausgasungen, insbesondere von trinkwasserbelastenden Stoffen, vermieden werden. Der erfindungsgemäße Wärmespeicher kann langfristig und funktionssicher betrieben werden, ohne die Qualität des zu erwärmenden fluiden Mediums zu belasten.

Nachfolgend wird die Erfindung anhand einer lediglich ein Ausführungsbeispiel darstellenden Zeichnung näher erläutert. Es zeigen in schematischer Darstellung:
- Fig. 1: einen Schnitt durch die Blasform mit dem darin befindlichen Wärmetauscher,
- Fig. 2: einen Schnitt durch die Blasform mit dem darin befindlichen und von einem Kunststoffschlauch überzogenen Wärmetauscher,
- Fig. 3: einen Schnitt durch die Blasform mit dem vom blasgeformten Kunststoffbehälter umgebenen Wärmetauscher,
- Fig. 4: einen Schnitt durch den in die Wickelanlage eingespannten Kunststoffbehälter,
- Fig. 5: einen Schnitt durch den in die Wickelanlage eingespannten und umwickelten Wärmespeicher,
- Fig. 6: einen Schnitt durch den fertiggestellten erfindungsgemäßen Wärmespeicher.

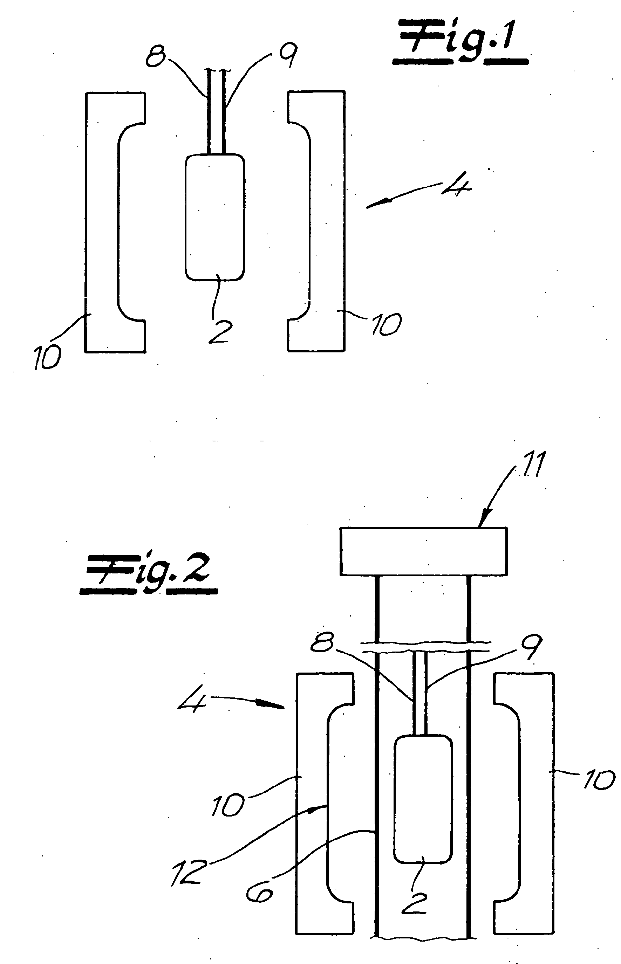

Die Fig. 1 bis 5 zeigen schematisch Schritte des Verfahrens, nach dem der erfindungsgemäße Wärmespeicher 1 hergestellt wird. Fig. 1 zeigt den Wärmetauscher 2, der in einer bevorzugten Ausführungsform zumindest zwei Anschlüsse, eine Vorlaufleitung 8 für die Einleitung des fluiden Mediums bzw. des Wärmeaustauschmediums in den Wärmetauscher 2 und eine Rücklaufleitung 9 für das fluide Medium bzw. das Wärmeaustauschmedium, aufweist. Der Wärmetauscher 2 in Fig. 1 ist in einer zumindest zwei Segmente 10 aufweisenden Blasform 4 auf einem nicht dargestellten Dorn bzw. Blasdorn eines Extrusionswerkzeuges 11 befestigt.

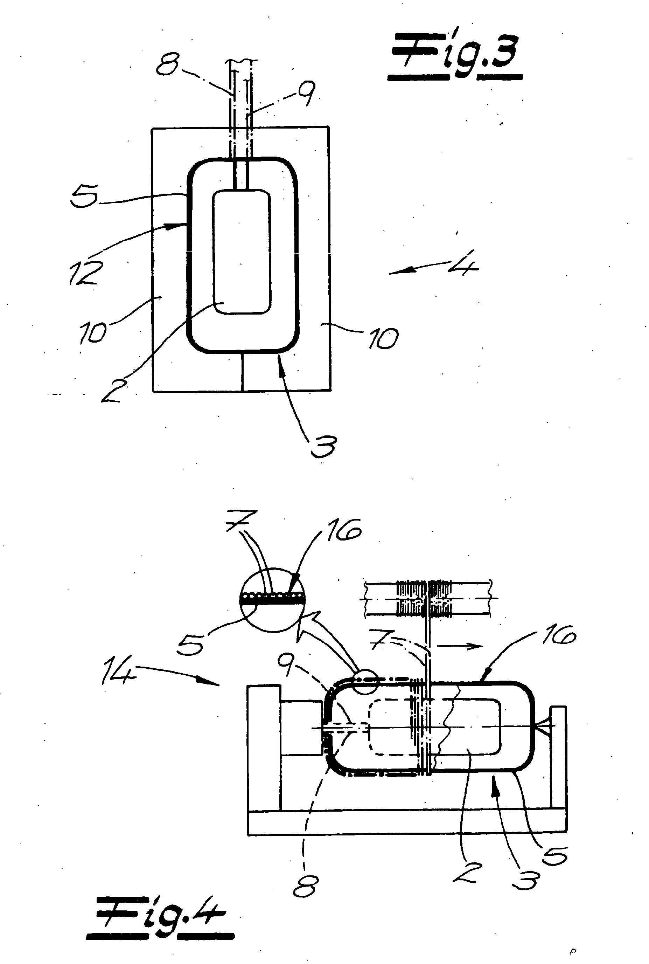

Mit Hilfe des Extrusionswerkzeuges 11 wird empfohlenermaßen ein thermoplastischer Kunststoffschlauch 6 über den Wärmetauscher 2 gezogen (Fig. 2). Nach dem Zusammenfügen der Segmente 10 der Blasform 4 wird der thermoplastische Kunststoffschlauch 6 in üblicher Weise mit einem fluiden Blasmedium beaufschlagt, so dass der Kunststoffschlauchmantel an die innere Wandung 12 der Blasform 4 gepresst wird (Fig. 3). Der Kunststoffschlauchmantel bildet auf diese Weise die Wandung 5 des Kunststoffbehälters 3, der den Wärmetauscher 2 bevorzugt vollständig umgibt. Es liegt im Rahmen der Erfindung, dass ausschließlich die Vorlaufleitung 8 und die Rücklaufleitung 9 des Wärmetauschers 2 die Wandung 5 des Kunststoffbehälters 3 durchdringen. In Fig. 3 sind der in der Blasform 4 angeordnete Kunststoffbehälter 3 und der von dem Kunststoffbehälter 3 umgebene Wärmetauscher 2 dargestellt, wobei die Vorlaufleitung 8 und die Rücklaufleitung 9 die Wandung 5 des Kunststoffbehälters 3 durchdringen.

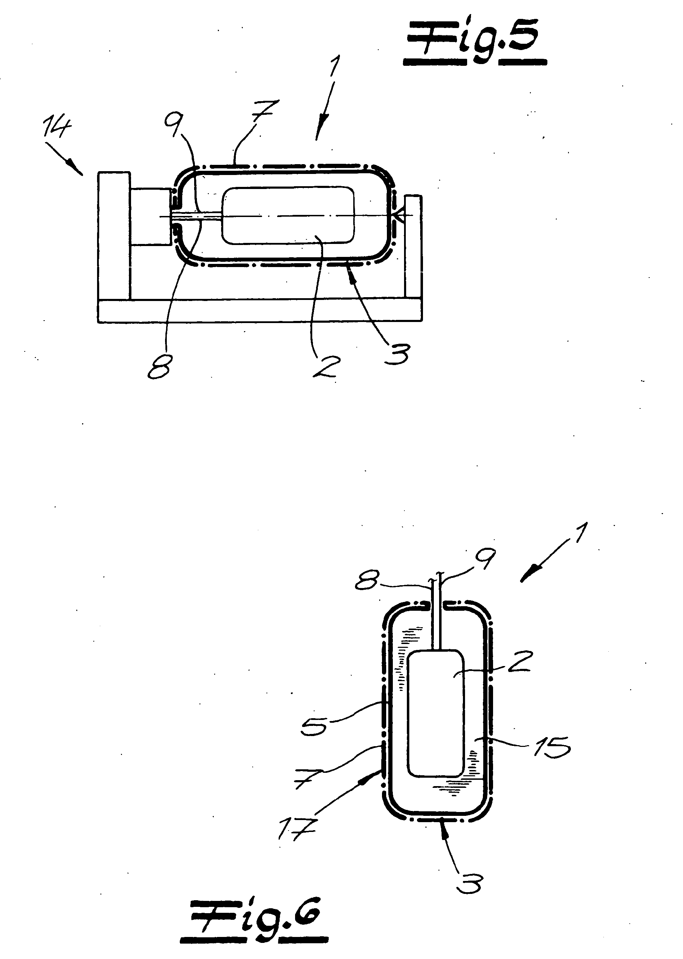

Nach dem Abkühlen wird der Kunststoffbehälter 3 mit dem im Innenraum angeordneten Wärmetauscher 2 aus der Blasform 4 entfernt und in eine Wickelanlage 14 (Fig. 4) gespannt. Vorzugsweise wird der faserverstärkte Werkstoff 7 vor dem Wickeln des Kunststoffbehälters 3 in einer nicht gezeigten Vorrichtung erwärmt, so dass der faserverstärkte Werkstoff 7 auf die äußere Oberfläche 16 der Wandung 5 des Kunststoffbehälters 3 aufgeschmolzen wird. In Fig. 5 ist der vollständig mit dem Faserwerkstoff 7 umwickelte Wärmespeicher 1 dargestellt, der noch in der Wickelanlage 14 eingespannt ist.

Der aus der Wickelanlage 14 entfernte Wärmespeicher 1 ist schematisch in Fig. 6 gezeigt. Es ist zu erkennen, dass lediglich die Vorlaufleitung 8 und Rücklaufleitung 9 die Wandung 5 und/oder die durch den faserverstärkten Werkstoff 7 gebildete Umwicklung 17 des Kunststoffbehälters 3 durchdringen. Die Wandung 5 des Kunststoffbehälters 3 besteht zweckmäßigerweise aus zumindest einem thermoplastischen Kunststoff, vorzugsweise aus zumindest einem Polyolefin und bevorzugt aus Polypropylen und/oder Polyethylen. In dem Hohlraum 15 zwischen Kunststoffbehälter 3 und Wärmetauscher 2, ist im Rahmen der Erfindung ein nicht bzw. unwesentlich komprimierbares fluides Puffermedium eingefüllt. Zur Erhöhung der Druckbeständigkeit ist der Kunststoffbehälter 3 mit einem vorzugsweise das gleiche thermoplastische Material wie der Kunststoffbehälter 3 aufweisenden faserverstärkten Werkstoff 7 umwickelt. Vorzugsweise ist der faserverstärkte Werkstoff 7 mit der äußeren Oberfläche 16 des Kunststoffbehälters 3 verschmolzen.

## Patentansprüche

1. Verfahren zur Herstellung eines Wärmespeichers (1) mit einem Wärmetauscher (2) für fluide Medien und einem den Wärmetauscher (2) umgebenden Kunststoffbehälter (3),
wobei der Wärmetauscher (2) zumindest einen Anschluss zur Einleitung und/oder Entnahme eines fluiden Mediums aufweist, wobei der Wärmetauscher (2) in eine Blasform (4) oder Rotationsform eingeführt und in der Blasform (4) oder Rotationsform gehalten wird,
wobei der den Wärmetauscher (2) umgebende Kunststoffbehälter (3) im Blasformverfahren oder Rotationsverfahren mit der Maßgabe hergestellt bzw. geformt wird, dass die Anschlussleitung des Wärmetauschers (2) die Wandung (5) des Kunststoffbehälters (3) durchgreift bzw. durchdringt,
**dadurch gekennzeichnet,**
**dass** der Kunststoffbehälter (3) mit zumindest einem faserverstärkten Werkstoff (7) zumindest bereichsweise umwickelt wird,
**dass** der faserverstärkte Werkstoff (7) mindestens einen thermoplastischen Kunststoff als Werkstoff enthält,
**dass** der faserverstärkte Werkstoff (7) vor dem Wickelvorgang erwärmt wird, so dass bereits beim Umwickeln des Kunststoffbehälters der thermoplastische Kunststoff, der in dem faserverstärkten Werkstoff (7) enthalten ist, auf den Kunststoffbehälter aufgeschmolzen wird.

2. Verfahren zur Herstellung eines Wärmespeichers nach Anspruch 1, **dadurch gekennzeichnet, dass** der Wärmetauscher (2) in die Blasform (4) eingebracht und gehalten wird, wobei ein Kunststoffschlauch (6) über den in der Blasform (4) gehaltenen Wärmetauscher (2) gezogen wird und wobei der Kunststoffbehälter (3) durch Blasformen des Kunststoffschlauches (6) hergestellt wird.

3. Verfahren zur Herstellung eines Wärmespeichers nach Anspruch 1, **dadurch gekennzeichnet, dass** der Wärmetauscher (2) in eine Rotationsform eingeführt und darin gehalten wird, wobei in die Rotationsform eine flüssige und/oder pulverförmige Formmasse gefüllt wird und wobei der Kunststoffbehälter (3) durch Rotationsformen aus der Formmasse hergestellt wird.

4. Verfahren zur Herstellung eines Wärmespeichers nach einem der Ansprüche 1 bis 3, **dadurch gekennzeichnet, dass** der Kunststoffbehälter (3) mit der Maßgabe hergestellt wird, dass der Kunststoffbehälter (3) den Wärmetauscher (2) zumindest bereichsweise berührungsfrei umgibt.

5. Verfahren zur Herstellung eines Wärmespeichers nach einem der Ansprüche 1 bis 4, **dadurch gekennzeichnet, dass** der faserverstärkte Werkstoff (7) zumindest 10Gew.% bis 50Gew.% des thermoplastischen Kunststoffes enthält.

6. Verfahren zur Herstellung eines Wärmespeichers nach einem der Ansprüche 1 bis 5, **dadurch gekennzeichnet, dass** der faserverstärkte Werkstoff (7) zumindest 50 Gew.% bis 90 Gew.% zumindest einer Faserart enthält.

7. Verfahren zur Herstellung eines Wärmespeichers nach einem der Ansprüche 1 bis 6, **dadurch gekennzeichnet, dass** als Faserart Glasfasern in dem faserverstärkten Werkstoff (7) enthalten sind.

## Claims

1. Method for producing a heat accumulator (1) having a heat exchanger (2) for fluid media and a plastic container (3) enclosing the heat exchanger (2),
wherein the heat exchanger (2) has at least one connection for feeding in and/or discharging a fluid medium, wherein the heat exchanger (2) is inserted into a blow mould (4) or rotational mould and held in the blow mould (4) or rotational mould,
wherein the plastic container (3) enclosing the heat exchanger (2) is produced or formed in a blow moulding process or rotation process respectively, with the proviso that the feed line connection of the heat exchanger (2) passes through or penetrates the wall (5) of the plastic container (3),
**characterized in that**
the plastic container (3) is wrapped with a fibre-reinforced material (7) at least in some regions,
the fibre-reinforced material (7) contains at least one thermoplastic plastic as the material,
the fibre-reinforced material (7) is heated prior to the wrapping process, so that during the wrapping of the plastic container (3) the thermoplastic plastic, which is contained in the fibre-reinforced material (7), already becomes fused onto the plastic container (3).

2. Method for producing a heat accumulator according to Claim 1, **characterized in that** the heat exchanger (2) is inserted into the blow mould (4) and held, wherein a plastic hose (6) is pulled over the heat exchanger (2) held in the blow mould (4) and wherein the plastic container (3) is produced by blow moulding of the plastic hose (6).

3. Method for producing a heat accumulator according to Claim 1, **characterized in that** the heat exchanger (2) is inserted into a rotational mould and held therein, wherein the rotational mould is filled with a liquid and/or powdered moulding compound and wherein the plastic container (3) is produced from the moulding compound by rotational moulding.

4. Method for producing a heat accumulator according to any one of Claims 1 to 3, **characterized in that** the plastic container (3) is produced with the proviso that the plastic container (3) encloses the heat exchanger (2) in a contactless manner, at least in some regions.

5. Method for producing a heat accumulator according to any one of Claims 1 to 4, **characterized in that** the fibre-reinforced material (7) contains at least 10% to 50% by weight of the thermoplastic plastic.

6. Method for producing a heat accumulator according to any one of Claims 1 to 5, **characterized in that** the fibre-reinforced material (7) contains at least 50% to 90% by weight of at least one type of fibre.

7. Method for producing a heat accumulator according to any one of Claims 1 to 6, **characterized in that** glass fibres are contained in the fibre-reinforced material (7) as the fibre type.

## Revendications

1. Procédé pour la fabrication d'un accumulateur de chaleur (1) avec un échangeur de chaleur (2) pour des fluides et un récipient en plastique (3) entourant l'échangeur de chaleur (2),
dans lequel l'échangeur de chaleur (2) comporte au moins un raccord pour l'introduction et/ou le prélèvement d'un fluide, dans lequel l'échangeur de chaleur (2) est introduit dans un moule de soufflage (4) ou dans un moule rotatif et maintenu dans le moule de soufflage (4) ou le moule rotatif,
dans lequel le récipient en plastique (3) entourant l'échangeur de chaleur (2) est fabriqué ou moulé pendant le procédé de moulage par soufflage ou le procédé de moulage par rotation, dans la mesure où la conduite de raccordement de l'échangeur de chaleur (2) traverse ou perce la paroi (5) du récipient en plastique (3),
**caractérisé en ce que**
le récipient en plastique (3) est enroulé au moins par endroits dans un matériau renforcé de fibres (7),
le matériau renforcé de fibres (7) contient au moins un matériau thermoplastique,
le matériau renforcé de fibres (7) est chauffé avant le procédé d'enroulement, de sorte que lors de l'enroulement du récipient en plastique, le matériau thermoplastique contenu dans le matériau renforcé de fibres (7) est fondu sur le récipient en plastique.

2. Procédé pour la fabrication d'un échangeur de chaleur selon la revendication 1, **caractérisé en ce que** l'échangeur de chaleur (2) est introduit et maintenu dans le moule de soufflage (4), un tube en plastique (6) étant tiré par l'échangeur de chaleur (2) maintenu dans le moule de soufflage (4), et le récipient en plastique (3) étant fabriqué par moulage par soufflage du tube en plastique (6).

3. Procédé pour la fabrication d'un échangeur de chaleur selon la revendication 1, **caractérisé en ce que** l'échangeur de chaleur (2) est introduit dans un moule rotatif et maintenu dans celui-ci, le moule rotatif étant rempli avec une masse de moulage liquide et/ou sous forme de poudre, et le récipient en plastique (3) étant fabriqué par moulage par rotation à partir de la masse de moulage.

4. Procédé pour la fabrication d'un échangeur de chaleur selon l'une des revendications 1 à 3, **caractérisé en ce que** le récipient en plastique (3) est fabriqué à condition que le récipient en plastique (3) entoure l'échangeur de chaleur (2) sans le toucher au moins par endroits.

5. Procédé pour la fabrication d'un échangeur de chaleur selon l'une des revendications 1 à 4, **caractérisé en ce que** le matériau renforcé de fibres (7) contient au moins de 10% en poids à 50% en poids de matériau thermoplastique.

6. Procédé pour la fabrication d'un échangeur de chaleur selon l'une des revendications 1 à 5, **caractérisé en ce que** le matériau renforcé de fibres (7) contient au moins de 50% en poids à 90% en poids d'un type de fibres.

7. Procédé pour la fabrication d'un échangeur de chaleur selon l'une des revendications 1 à 6, **caractérisé en ce que** des fibres de verre sont contenues comme type de fibres dans le matériau renforcé de fibres (7).
